(19) 

Europäisches
Patentamt

European
Patent Office

Office européen
des brevets

(11)  **EP 4 491 437 A1**

(12)  **EUROPEAN PATENT APPLICATION**

(43) Date of publication:
**15.01.2025   Bulletin 2025/03**

(21) Application number: **24182175.0**

(22) Date of filing: **14.06.2024**

(51) International Patent Classification (IPC):
**B60L 15/00** (2006.01)      **B60L 50/51** (2019.01)
**B60L 53/14** (2019.01)      **B60L 53/22** (2019.01)
**B60L 53/24** (2019.01)      **H02J 7/02** (2016.01)
**H02M 1/00** (2006.01)

(52) Cooperative Patent Classification (CPC):
**B60L 50/51; B60L 15/007; B60L 53/14;**
**B60L 53/22; B60L 53/24; H02J 7/02; H02M 1/007;**
B60L 2210/10; B60L 2210/12; B60L 2210/30;
B60L 2210/40; B60L 2220/54; B60L 2220/56;
H02J 2207/20; H02J 2310/48

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:  **04.07.2023   JP 2023109985**

(71) Applicant: **Aisin Corporation**
**Aichi 448-8650 (JP)**

(72) Inventors:
• **SAHA, Subrata**
  **Kariya, 448-8650 (JP)**
• **NAKAMURA, Keisuke**
  **Kariya, 448-8650 (JP)**
• **TAGUCHI, Shin**
  **Kariya, 448-8650 (JP)**

(74) Representative: **Kramer Barske Schmidtchen**
**Patentanwälte PartG mbB**
**European Patent Attorneys**
**Landsberger Strasse 300**
**80687 München (DE)**

(54)   **IN-VEHICLE CHARGING DEVICE**

(57)     An in-vehicle charging device (10) that charges a DC power supply (3) of a vehicle driving device (9) with power supplied from an external AC power supply (4), the vehicle driving device (9) including a rotating electrical machine (70) of a wound field type serving as a driving power source of a wheel, the rotating electrical machine (70) including a stator (71) including multi-phase stator coils (7) connected to each other at a neutral point (7N) and a rotor (72) including a field winding (7r) that generates a field magnetic flux, the DC power supply (3), an inverter (5) connected between the stator coils (7) and the DC power supply (3) and converting power between a direct current and a multi-phase alternating current, and an excitation circuit (50) connected between the field winding (7r) and the DC power supply (3) and exciting the field winding (7r), includes a first circuit (1) configured to include the excitation circuit (50) and convert power between AC power on an external AC power supply side and first DC power, and a second circuit (2) configured to include the inverter (5), the multi-phase stator coils (7), and an output capacitor (Cs), and generate second DC power for charging the DC power supply (3) from the first DC power, wherein the output capacitor (Cs) is connected between the neutral point (7N) of the multi-phase stator coils (7) and a DC negative electrode.

FIG.4

EP 4 491 437 A1

## Description

TECHNICAL FIELD

The present disclosure relates to an in-vehicle charging device.

BACKGROUND DISCUSSION

JP 2022-503713 T discloses an in-vehicle charging device (onboard charger) that charges a DC power supply mounted on a vehicle including a rotating electrical machine as a driving power source of wheels of an electric vehicle, a hybrid vehicle, or the like while being mounted on the vehicle (The reference signs in parentheses in the background discussion are those of the referenced document.). FIG. 3 of this document illustrates an in-vehicle charging device in which a single-phase external AC power supply (310) is connected to a neutral point of Y-connected three-phase coils, each arm on the AC side of an inverter (220) is connected to each of the three-phase coils, an input terminal of a DC/DC converter is connected to a DC terminal of the inverter (220), and a DC power supply is connected to an output terminal of the DC/DC converter. The three-phase coil and the inverter (220) form an AC/DC converter that converts a sinusoidal grid current from the external AC power supply (310) into a direct current. By executing switching control on the inverter (220), the AC/DC converter also functions as a power factor correction (PFC) circuit that improves the power factor of DC power converted from AC power. The current after the AC/DC conversion has a ripple with a frequency twice the frequency (system frequency) of the external AC power supply (310). The DC/DC converter reduces the ripple and generates a battery current for charging the DC power supply.

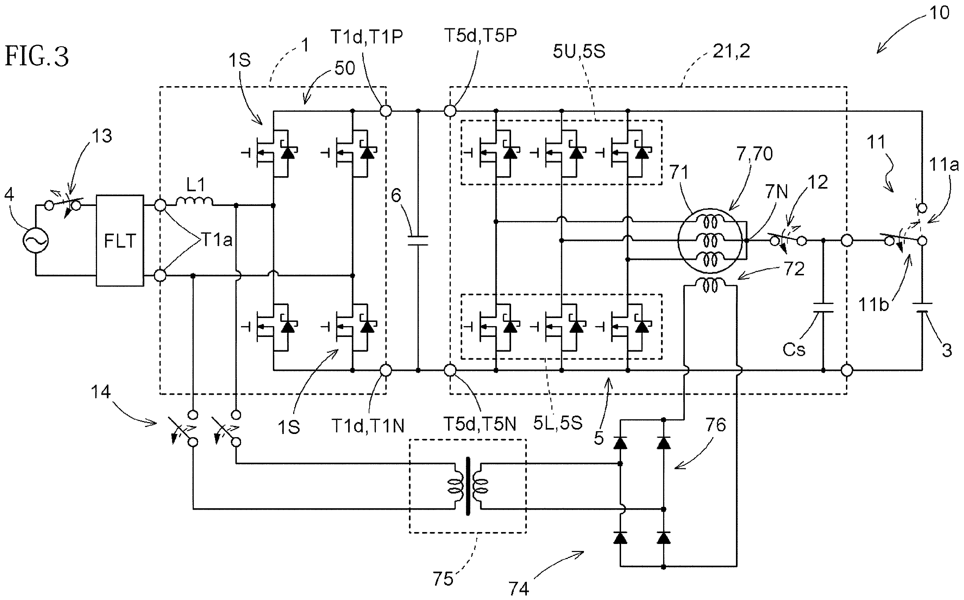

Here, for example, in an in-vehicle charging device in an electric vehicle or a hybrid vehicle, a coil (stator coil) provided in a stator of a rotating electrical machine as the driving power source in the vehicle can be used as a three-phase coil. However, such a rotating electrical machine is designed to have a high power density, and has a small inductance. As illustrated in FIG. 3 of the above document, in a case where the single-phase external AC power supply is connected to the neutral point to form the AC/DC converter, a peak value of a harmonic current in the system current of the external AC power supply tends to increase at the time of AC/DC conversion.

As a method of suppressing this, it is conceivable to increase the control frequency of the inverter constituting the AC/DC converter. Alternatively, it is conceivable to increase the control frequency of the DC/DC converter in order to reduce the ripple on the DC/DC converter side. However, in a case where the control frequency is increased, it is necessary to reduce a control cycle (operation frequency) of a control device that controls the inverter or the DC/DC converter. Switching at a high frequency involving a quick control cycle increases loss in switching elements included in the inverter and the DC/DC converter, leading to a decrease in the efficiency of the in-vehicle charging device. In addition, it is necessary to use a microcomputer or the like that can operate at high speed as the control device, which leads to an increase in the cost of the in-vehicle charging device. Alternatively, it is also conceivable to add an inductor between the external AC power supply and the neutral point of the multi-phase coil. However, also in this case, the cost of the in-vehicle charging device increases due to the addition of the inductor.

A need thus exists for an in-vehicle charging device that charges a DC power supply of a vehicle driving device including a rotating electrical machine, an inverter, and the DC power supply with power from an external AC power supply using a coil of the rotating electrical machine and the inverter, the in-vehicle charging device being configured to suppress an increase in system cost.

SUMMARY

An in-vehicle charging device in view of the above is an in-vehicle charging device that charges a DC power supply of a vehicle driving device with power supplied from an external AC power supply, the vehicle driving device including a rotating electrical machine of a wound field type serving as a driving power source of a wheel, the rotating electrical machine including a stator including multi-phase stator coils connected to each other at a neutral point and a rotor including a field winding that generates a field magnetic flux, the DC power supply, an inverter connected between the stator coils and the DC power supply and converting power between a direct current and a multi-phase alternating current, and an excitation circuit connected between the field winding and the DC power supply and exciting the field winding, includes a first circuit configured to include the excitation circuit and convert power between AC power on an external AC power supply side and first DC power, and a second circuit configured to include the inverter, the multi-phase stator coils, and an output capacitor, and generate second DC power for charging the DC power supply from the first DC power, wherein the output capacitor is connected between the neutral point of the multi-phase stator coils and a DC negative electrode.

According to this configuration, since the first circuit is configured using the excitation circuit and the second circuit is configured using the inverter and the stator coil, it is possible to configure the in-vehicle charging device with the simplified structure as compared with a case where a circuit for charging a DC power supply is separately provided. In addition, an appropriate inductance is required in a circuit that converts power between AC power on the external AC power supply side and the first DC power among circuits constituting the in-vehicle charging device. Although the coil of the rotating electrical machine can be used as an inductor, the rotating electrical machine is designed to have a high power density, and has a small inductance in general. According to this configuration, the first circuit requiring an appropriate inductance for converting power between the AC power and the first DC power is configured without using the coil of the rotating electrical machine. Therefore, the first circuit can be configured while performance sufficient for AC/DC conversion such as a power factor correction function is ensured. The cost of the in-vehicle charging device can be reduced by configuring the second circuit that does not require high inductance by using the drive system circuit of the rotating electrical machine. Since an appropriate inductance can be set in the AC/DC converter, it is not necessary to control the first circuit with a short control cycle (high control frequency) even if the first circuit is a switching power supply circuit, and the loss of the switching element constituting the first circuit is easily reduced. As described above, according to this configuration, the in-vehicle charging device that charges the DC power supply of the vehicle driving device including the rotating electrical machine, the inverter, and the DC power supply with power from the external AC power supply using the coil of the rotating electrical machine and the inverter can be configured while suppressing an increase in system cost.

BRIEF DESCRIPTION OF THE DRAWINGS

The foregoing and additional features and characteristics of this disclosure will become more apparent from the following detailed description considered with the reference to the accompanying drawings, wherein:

　　　FIG. 1 is a schematic circuit block diagram of a drive control system of a rotating electrical machine;
　　　FIG. 2 is a circuit block diagram illustrating a first example of an in-vehicle charging device;
　　　FIG. 3 is a circuit block diagram illustrating a second example of the in-vehicle charging device;
　　　FIG. 4 is a circuit block diagram illustrating a third example of the in-vehicle charging device;
　　　FIG. 5 is a circuit block diagram illustrating a fourth example of the in-vehicle charging device;
　　　FIG. 6 is a functional block diagram obtained by modifying the circuit block diagrams illustrated in FIGS. 4 and 5; and
　　　FIG. 7 is a circuit block diagram illustrating a comparative example of the in-vehicle charging device.

DETAILED DESCRIPTION

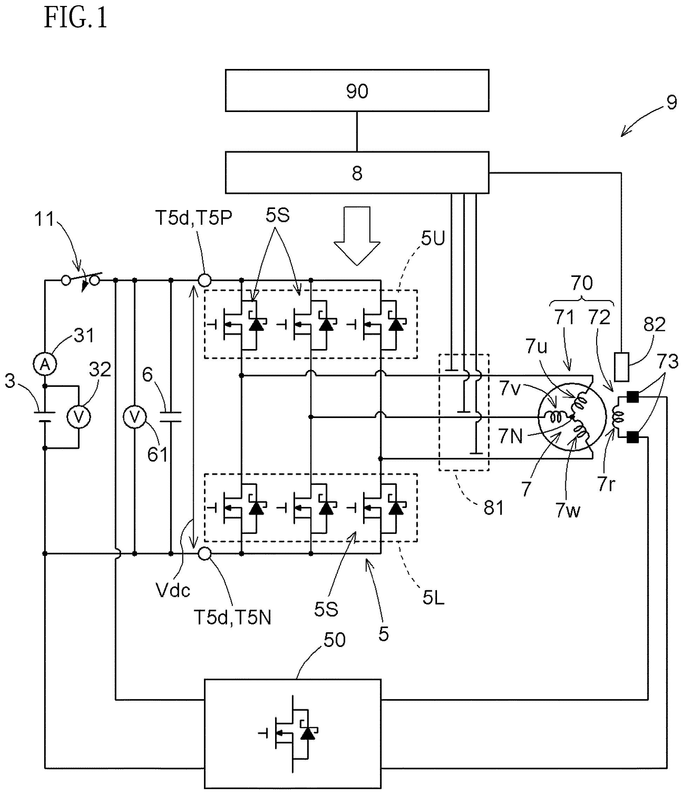

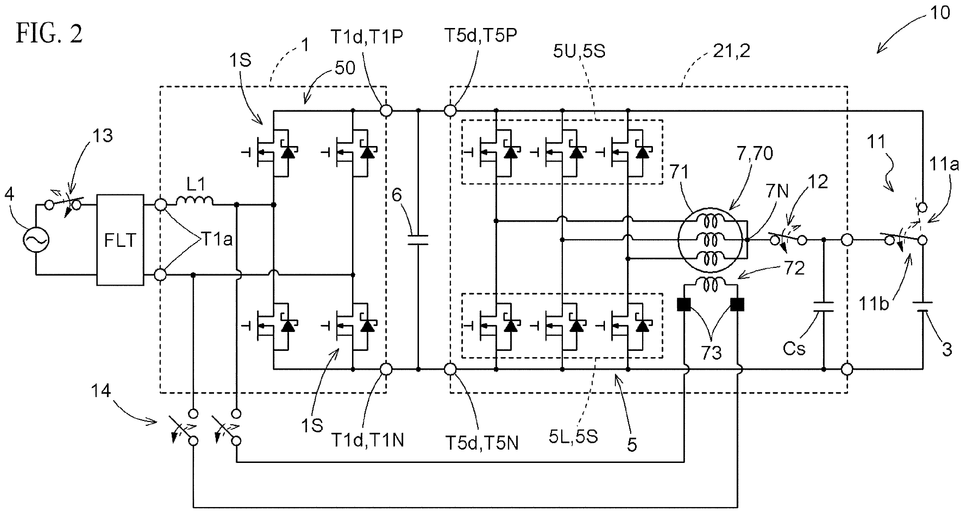

Hereinafter, an embodiment of an in-vehicle charging device will be described with reference to the drawings. The circuit block diagram of FIG. 1 schematically illustrates a drive control system of a rotating electrical machine 70, and the circuit block diagrams of FIGS. 2 to 5 illustrate an example of an in-vehicle charging device 10 that uses the drive control system of the rotating electrical machine 70. The in-vehicle charging device 10 is a device that charges a DC power supply 3 included in a vehicle driving device 9 illustrated in FIG. 1 while being mounted on the vehicle. As illustrated in FIG. 1, the vehicle driving device 9 of the present embodiment includes the rotating electrical machine 70 that serves as a driving power source for wheels of a hybrid vehicle, an electric vehicle, or the like, an inverter 5 that converts power between a direct current and a multi-phase (three-phase) alternating current, and the DC power supply 3 connected to the inverter 5. The vehicle driving device 9 is not limited to including other driving power sources such as an internal combustion engine (not illustrated) in addition to the rotating electrical machine 70.

As illustrated in FIGS. 2 to 5, the in-vehicle charging device 10 is a device that charges the DC power supply 3 of the vehicle driving device 9 with power supplied from the external AC power supply 4 (here, single-phase grid power supply), and is a device called an onboard charger.

In the present embodiment, the in-vehicle charging device 10 is configured to share a part with the vehicle driving device 9. Specifically, the inverter 5, coils 7 (stator coils) of the rotating electrical machine 70, and an excitation circuit 50 are shared.

As illustrated in FIG. 1, the vehicle driving device 9 includes a control device 8 that controls the rotating electrical machine 70 serving as a driving power source of the vehicle, and the control device 8 executes current feedback control to execute drive control on the rotating electrical machine 70. The rotating electrical machine 70 to be driven is an electrically excited synchronous motor (EESM) including a stator 71 in which the coils 7 (stator coils) of a plurality of phases (a three-phase mode in which N = 3 where N is an arbitrary natural number is exemplified in the present embodiment) are arranged in a stator core, and wound field type rotor 72. The electrically excited synchronous motor has a rotor structure including an electromagnet that uses a field winding 7r as a field source instead of a permanent magnet. The field magnetic flux by the electromagnet can be adjusted by the field current supplied from the excitation circuit 50 controlled by the control device 8 to the field winding 7r. The excitation circuit 50 includes a switching element, adjusts (transforms) a DC voltage supplied from the DC power supply 3, and applies the DC voltage to the field winding 7r. The electrically excited synchronous motor has advantages as compared with a permanent magnet synchronous motor (PMSM), that is, (1) since the field magnetic flux is variable, it is expected to improve the efficiency in medium-to-high speed and low-torque operation regions, and it is possible to expand a constant output range, and (2) it is not affected by unstable supply of permanent magnets using rare earth or the like. For this reason, in recent years, the electrically excited synchronous motor has been increasingly used as a driving power source of wheels in an electric vehicle or a hybrid vehicle.

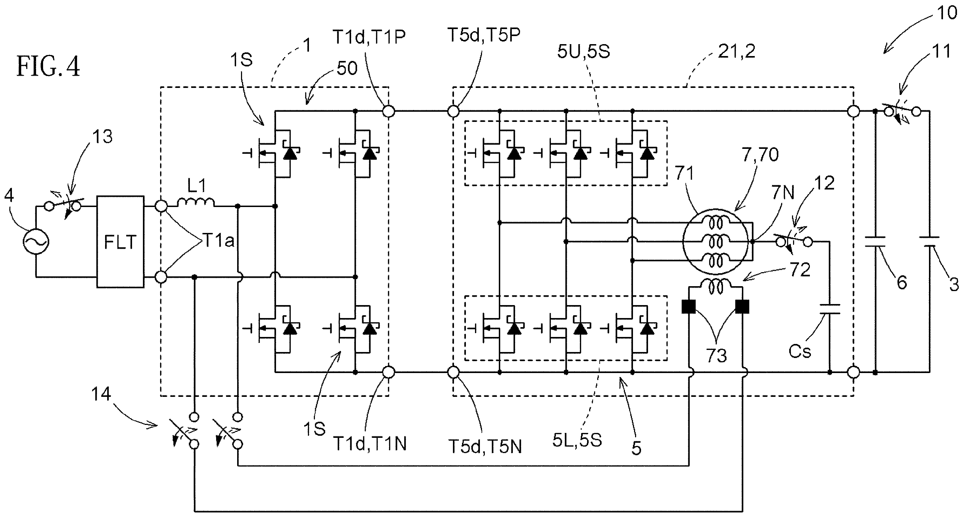

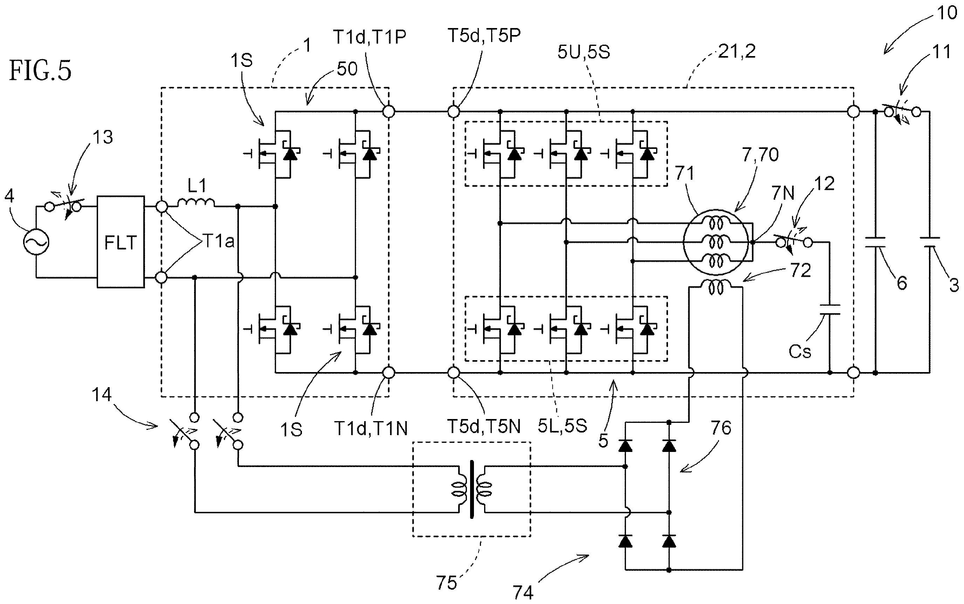

As described above, the electrically excited synchronous motor causes the field current to flow through the field winding 7r of the rotor 72 to cause a field to appear in the rotor 72, but the rotor 72 rotates and thus it is necessary to have a structure for causing the field current to flow in the same direction in the field winding 7r. FIG. 1 illustrates a configuration including a brush 73 that is a mechanical switching structure. The rotating electrical machine 70 of FIGS. 2 and 4 to be referred to later also has a configuration including the brush 73. Like the rotating electrical machine 70 of FIGS. 3 and 5 to be referred to later, a drive circuit 74 may be provided instead of the brush 73 to electrically change the direction of the field current (brushless EESM). The drive circuit 74 includes, for example, a rotary transformer 75 and a rectifier circuit 76. Since the structure of such an electrically excited synchronous motor is known, a detailed description thereof will be omitted.

In the present embodiment, the stator 71 has a Y (star) configuration in which the three-phase coils 7 are short-circuited at a neutral point 7N. However, the rotating electrical machine 70 may include, for example, two sets of three-phase coils 7, and may be driven by a six-phase alternating current. The rotating electrical machine 70 can function as both an electric motor and a generator. When the rotating electrical machine 70 functions as an electric motor, the rotating electrical machine 70 is in a powering state, and when the rotating electrical machine 70 functions as a generator, the rotating electrical machine 70 is in a regeneration state.

As illustrated in FIG. 1, the vehicle driving device 9 includes the inverter 5. The inverter 5 is connected to the AC rotating electrical machine 70 and the DC power supply 3 to convert power between a multi-phase alternating current and a direct current. Paired DC terminals (DC terminals T5d) of the inverter 5 are connected to positive and negative electrode terminals of the DC power supply 3. Specifically, a positive terminal (inverter positive terminal T5P) of the paired DC terminals T5d is connected to the positive electrode of the DC power supply 3, and a negative terminal (inverter negative terminal T5N) of the paired DC terminals T5d is connected to the negative electrode of the DC power supply 3. Each of multi-phase AC terminals of the inverter 5 is connected to each of the multi-phase coils 7. In the present embodiment, the inverter 5 includes a U-phase arm, a V-phase arm, and a W-phase arm as multi-phase arms. Each arm is formed by connecting an upper switching element 5U disposed on the positive electrode side and a lower switching element 5L disposed on the negative electrode side in series. The midpoint of each arm, that is, the connection point between the upper switching element 5U and the lower switching element 5L is connected to each coil 7. Specifically, the midpoint of the U-phase arm and a U-phase coil 7u are connected, the midpoint of the V-phase arm and a V-phase coil 7v are connected, and the midpoint of the W-phase arm and a W-phase coil 7w are connected.

A smoothing capacitor (DC link capacitor 6) that smooths a voltage (DC link voltage Vdc) between the positive electrode and the negative electrode is provided on the DC side of the inverter 5. A voltage sensor (DC link voltage sensor 61) that detects the DC link voltage Vdc is also provided on the DC side of the inverter 5.

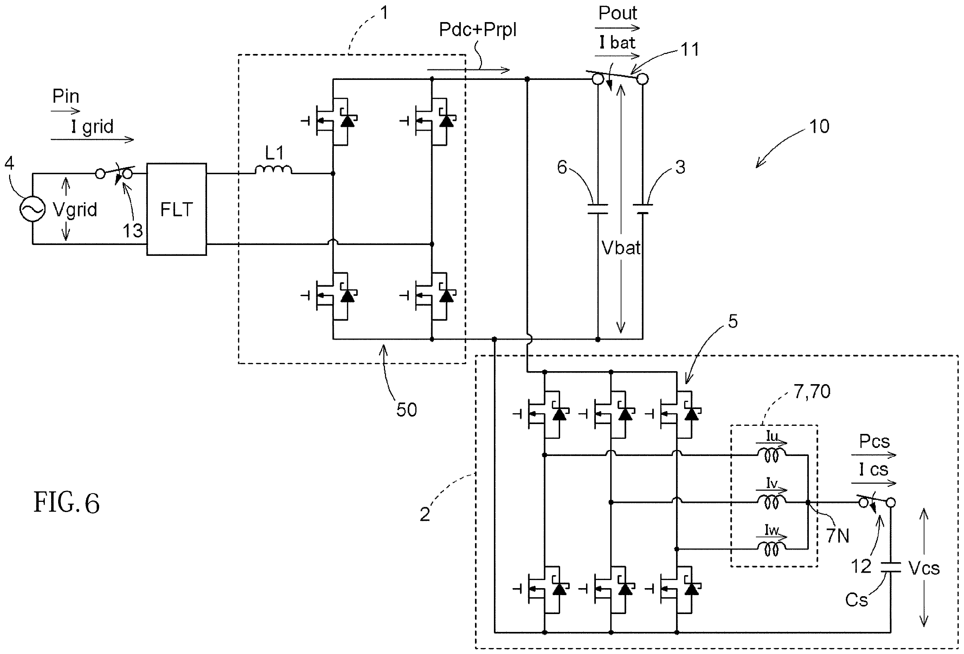

The DC power supply 3 includes, for example, a rechargeable secondary battery such as a lithium ion battery, an electric double layer capacitor, or the like. In a case where the rotating electrical machine 70 is the driving power source of the vehicle as in the present embodiment, the DC power supply 3 is a high-voltage, high-capacity DC power supply, and the rated power supply voltage is, for example, 200 to 400 [V]. In many cases, the DC power supply 3 is configured to be able to connect and disconnect electrical connection to and from the inverter 5 and the rotating electrical machine 70 by operation of a main switch (ignition switch) or the like of the vehicle. For example, the DC power supply 3 is connected to the inverter 5 and the rotating electrical machine 70 via a main contactor 11 (first contactor) including a relay or the like. The DC power supply 3 also includes a current sensor (battery current sensor 31) that detects an input-output current (battery current Ibat: see FIG. 6) to and from the DC power supply 3, and a voltage sensor (battery voltage sensor 32) that detects a terminal voltage (battery voltage Vbat: see FIG. 6) of the DC power supply 3.

Although not illustrated, for example, in a case where the DC power supply 3 is a lithium ion battery or the like, a battery management system (BMS) is often provided. A secondary battery such as a lithium ion battery includes a plurality of cells (battery cells). The battery management system is a battery management control system that performs (1) prevention of overcharge and overdischarge of a cell, (2) prevention of overcurrent from flowing through a cell, (3) temperature management of a cell, (4) calculation of a state of charge (SOC), (5) equalization of a cell voltage, and the like. The battery current sensor 31 and the battery voltage sensor 32 described above may be configured as a part of the battery management system.

As illustrated in FIG. 1, the inverter 5 includes a plurality of switching elements 5S. As the switching element 5S, it is preferable to use a power semiconductor element capable of operating at a high frequency, such as an insulated gate bipolar transistor (IGBT), a power metal oxide semiconductor field effect transistor (MOSFET), a silicon carbide-metal oxide semiconductor FET (SiC-MOSFET), a SiC-static induction transistor (SiC-SIT), or a gallium nitride-MOSFET (GaN-MOSFET).

The present embodiment exemplifies a mode in which an FET is used as the switching element 5S. In the present embodiment, a freewheel diode is connected in parallel to each switching element 5S with a direction from the negative electrode to the positive electrode (direction from the lower side to the upper side) as a forward direction. It is needless to mention that, in a case where a body diode is used or in a case where reverse conduction in a wide bandgap semiconductor transistor made of enhanced mode gallium nitride (E-GaN) is used, such a freewheel diode does not need to be provided.

As illustrated in FIG. 1, the inverter 5 is controlled by the control device 8. The control device 8 is constructed using a logic circuit such as a microcomputer as a core member. For example, the control device 8 drives the rotating electrical machine 70 via the inverter 5 by executing current feedback control using a vector control method on the basis of a target torque (torque command) of the rotating electrical machine 70 provided as a request signal from another control device such as a vehicle control device 90 that is one of the host control devices. In the vector control method, a current (in the present embodiment, a U-phase current lu, a V-phase current Iv, and a W-phase current Iw: see FIG. 6 and the like) flowing through the coil 7 of each phase is coordinate-transformed into vector components of a d-axis that is a direction of a magnetic field generated by the rotor 72 and a q-axis in a direction orthogonal to the d-axis (a direction advanced by an electrical angle of rr/2 with respect to the direction of the magnetic field) to execute feedback control. The coordinate system of the transformed coordinates is referred to as "dq-axis orthogonal coordinate system". An operating voltage of a logic circuit element such as a microcomputer is about 3.3 to 5 volts. In the present embodiment, although not illustrated for simplicity, a control signal generated by the logic circuit element is transmitted to the inverter 5 via a drive circuit. Alternatively, it may be considered that the control device 8 includes the drive circuit.

The actual current flowing through the coil 7 of each phase of the rotating electrical machine 70 is detected by a current sensor (motor current sensor 81), and the control device 8 acquires the detection result. The rotational position and the rotational speed (angular velocity) of the rotor 72 of the rotating electrical machine 70 at each time point are detected by a rotation sensor 82 such as a resolver or an inductive position sensor, and the control device 8 acquires the detection result. The control device 8 executes current feedback control using the detection results of the motor current sensor 81 and the rotation sensor 82. The control device 8 includes various functional units for current feedback control, and each functional unit is implemented by cooperation of hardware such as a microcomputer and software (program).

As described above, the rotating electrical machine 70 connected to the DC power supply 3 via the inverter 5 functions as an electric motor by the power supplied from the DC power supply 3, and can also function as a generator to charge the DC power supply 3. For example, in a hybrid vehicle, mechanical energy can be supplied to the rotating electrical machine 70 by power of an internal combustion engine or the like to cause the rotating electrical machine 70 to generate power, but there are few opportunities for power generation, and the DC power supply 3 cannot be sufficiently charged in some cases. In addition, in an electric vehicle in which only the rotating electrical machine 70 is mounted as a driving power source, only power generation by mechanical energy from wheels in inertial traveling or the like is performed, and the DC power supply 3 cannot be sufficiently charged in many cases. In the hybrid vehicle, the energy efficiency in a case where electric power is supplied from the outside is sometimes better than that in a case where electric power is generated by the rotating electrical machine 70. For this reason, it is preferable that the DC power supply 3 be chargeable by an external power supply while being mounted on the vehicle.

The in-vehicle charging device 10 of the present embodiment charges the DC power supply 3 of the vehicle driving device 9 with power supplied from the external AC power supply 4. As illustrated in FIGS. 2 to 5, the in-vehicle charging device 10 includes a first circuit 1 that is connected to the external AC power supply 4 and converts AC power from the external AC power supply 4 into first DC power, and a second circuit 2 that generates second DC power for charging the DC power supply 3 from the first DC power. The first circuit 1 includes the excitation circuit 50. The second circuit 2 includes the inverter 5, the multi-phase coil 7, and an output capacitor Cs. The output capacitor Cs is connected between the neutral point 7N of the coil 7 and the DC negative electrode. As described later, the first circuit 1 is an AC/DC converter, and the second circuit 2 is a DC/DC converter or an active decoupling circuit.

The first circuit 1 (AC/DC converter) and the second circuit 2 (DC/DC converter or active decoupling circuit) include switching elements (switching elements denoted by reference numerals 1S and 5S), and these switching elements are controlled by the control device 8 that executes drive control on the rotating electrical machine 70 via the inverter 5. As described later, the in-vehicle charging device 10 includes contactors (main contactor 11, OBC contactor 12 (second contactor), grid contactor 13, and excitation contactor 14 (third contactor)). These contactors include, for example, relays, and these contactors are also controlled by the control device 8 or the control device 8 and the vehicle control device 90. As described above with reference to FIG. 1, the control device 8 is included in the drive control system of the rotating electrical machine, and the control device 8 is also used for the drive control of the rotating electrical machine 70 and the charge control of the DC power supply 3.

When the DC power supply 3 is charged, power is supplied from the external AC power supply 4 to the DC power supply 3. Therefore, in view of the circuit configuration, the first circuit 1 (AC/DC converter) disposed relatively on the external AC power supply 4 side (upstream side) may be referred to as "front end circuit", and the second circuit 2 (DC/DC converter or active decoupling circuit) disposed relatively on the DC power supply 3 side (downstream side) may be referred to as "back end circuit". In the present embodiment, the first circuit 1 (AC/DC converter), which is a front end circuit connected to the external AC power supply 4, and the second circuit 2 (DC/DC converter or active decoupling circuit), which is a back end circuit disposed closer to the DC power supply 3 than the first circuit 1, share the drive system circuit (excitation circuit 50, coil 7, and inverter 5) of the rotating electrical machine 70. In the present embodiment, AC power is supplied from the external AC power supply 4 to the in-vehicle charging device 10 via an EMI filter FLT that reduces electro magnetic interference (EMI) noise.

Hereinafter, a specific circuit configuration will be described as an example. FIGS. 2 and 3 illustrate the in-vehicle charging device 10 in which the second circuit 2 is a DC/DC converter. FIGS. 4 and 5 illustrate the in-vehicle charging device 10 in which the second circuit 2 is an active decoupling circuit. FIG. 2 illustrates a first example of the in-vehicle charging device 10, FIG. 3 illustrates a second example of the in-vehicle charging device 10, FIG. 4 illustrates a third example of the in-vehicle charging device 10, and FIG. 5 illustrates a fourth example of the in-vehicle charging device 10. FIGS. 2 and 4 illustrate a mode in which the field current is mechanically switched by the brush 73, and FIGS. 3 and 5 illustrate a mode in which the field current is electrically switched by the drive circuit 74.

As illustrated in FIGS. 2 and 3, the in-vehicle charging device 10 includes the main contactor 11, the OBC contactor 12, the grid contactor 13, and the excitation contactor 14. The main contactor 11 connects and disconnects the electrical connection between the output capacitor Cs and the DC power supply 3, and also connects and disconnects the electrical connection between the DC power supply 3 and the DC terminal T5d of the inverter 5 and the electrical connection between the DC power supply 3 and the excitation circuit 50 complementarily with the output capacitor Cs. The OBC contactor 12 connects and disconnects the electrical connection between the neutral point 7N and the output capacitor Cs. The grid contactor 13 selectively connects an AC terminal T1a of the first circuit 1 (AC/DC converter) to the external AC power supply 4 (connects and disconnects the AC terminal T1a to and from the external AC power supply 4). The excitation contactor 14 disconnects the electrical connection between the excitation circuit 50 and the field winding 7r.

When the grid contactor 13 is closed, the grid contactor 13 is brought into a conductive state, and the external AC power supply 4 and the in-vehicle charging device 10 (AC/DC converter) are electrically connected. AC power is supplied to the in-vehicle charging device 10 via the grid contactor 13 and the EMI filter FLT.

The main contactor 11 includes two contacts, that is, a main contactor first contact 11a and a main contactor second contact 11b. In a case where the inverter 5 functions as the in-vehicle charging device 10, the main contactor second contact 11b is closed and the main contactor first contact 11a is opened. In a case where the inverter 5 is used for drive control of the rotating electrical machine 70, the main contactor first contact 11a is closed, the main contactor second contact 11b is opened, the inverter positive terminal T5P of the inverter 5 is connected to the DC power supply 3 via the main contactor 11, and the excitation circuit 50 is connected to the DC power supply 3 via the main contactor 11. In a case where the vehicle is parked or in a case where it is necessary to cut off power supply to the rotating electrical machine 70 due to an abnormality or the like, both the main contactor first contact 11a and the main contactor second contact 11b can be opened.

As indicated by broken lines in the figures, in a state where the main contactor 11 (first contactor) is closed on the main contactor first contact 11a side, the excitation contactor 14 (third contactor) is closed, the DC power supply 3 and a DC terminal T5d of the inverter 5 are electrically connected, the DC power supply 3 and the field winding 7r are electrically connected, and the OBC contactor 12 (second contactor) is opened, power is converted between the DC power supply 3 and the rotating electrical machine 70 via the inverter 5, and the field winding 7r is excited. That is, the rotating electrical machine 70 is subjected to drive control via the inverter 5. It is needless to mention that the grid contactor 13 is open at this time. In addition, as indicated by solid lines in the figures, in a state where the main contactor 11 is closed on the main contactor second contact 11b side, the DC power supply 3 and the output capacitor Cs are electrically connected, the excitation contactor 14 is opened, and the OBC contactor 12 is closed, power is converted between the external AC power supply 4 and the DC power supply 3 via the AC/DC converter (first circuit 1) and the DC/DC converter (second circuit 2) including the inverter 5. It is needless to mention that the grid contactor 13 is closed at this time.

As described above, only by changing the connection mode to the coil 7 and the field winding 7r by the main contactor 11, the OBC contactor 12, and the excitation contactor 14, it is possible to implement a circuit capable of switching between the function of executing drive control on the rotating electrical machine 70 and the function of charging the DC power supply 3 with the external AC power supply 4. That is, the in-vehicle charging device 10 can be configured with a simple configuration.

The configuration of the first circuit 1, which is an AC/DC converter, is common to all of the first example, the second example, the third example, and the fourth example, and includes the excitation circuit 50 in all the examples. As illustrated in FIG. 2 and the like, the first circuit 1 includes an inductor L1. In AC/DC conversion, a phase difference occurs between a voltage phase and a current phase due to an inductive impedance or a capacitive impedance, and the power factor decreases due to the phase difference. The first circuit 1, which is an AC/DC converter, includes the switching element 1S, and by controlling the switching element 1S, for example, the current phase is adjusted, the phase difference is compensated, and the power factor can be corrected. That is, the first circuit 1 is also configured to function as a power factor correction (PFC) circuit that corrects the power factor of DC power converted from AC power supplied from the external AC power supply 4.

In the present embodiment, the first circuit 1, which is an AC/DC converter, includes the inductor L1 and a full bridge circuit using the switching element 1S. By providing the full bridge circuit, the first circuit 1 can function as a bidirectional converter capable of AC/DC conversion and DC/AC conversion. For example, the in-vehicle charging device 10 can be used as a device having two functions, that is, a function of charging the DC power supply 3 with power supplied from the external AC power supply 4 and a function of supplying AC power to a device outside the vehicle with power stored in the DC power supply 3.

In recent years, it has been proposed to use the DC power supply 3 of an electric vehicle or a hybrid vehicle as an emergency power supply at the time of disaster or the like. Since the first circuit 1 includes the full bridge circuit, the DC power supply 3 can be used as such an emergency power supply. It is needless to mention that, in a case where such use of the DC power supply 3 is not considered, the first circuit 1 may be configured as a one-way converter that performs only AC/DC conversion. In this case, the first circuit 1 may include, for example, a half bridge circuit.

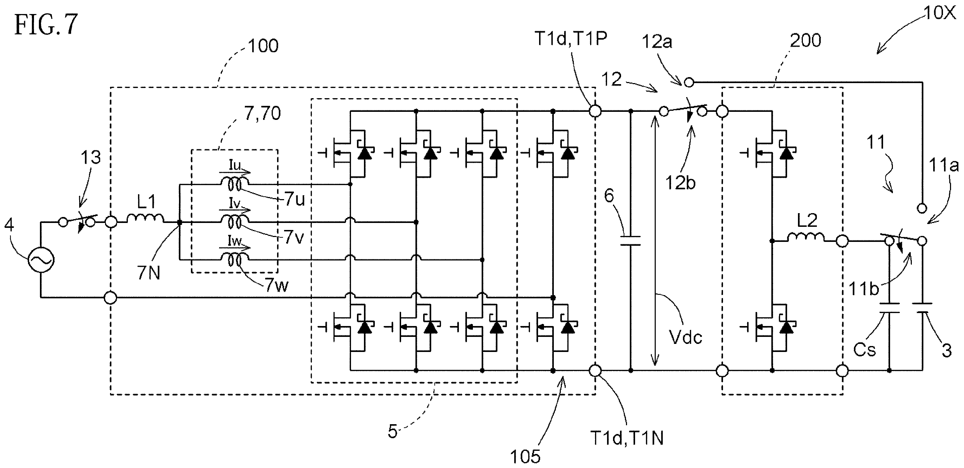

The circuit block diagram of FIG. 7 illustrates a charging device 10X, which is a comparative example of the in-vehicle charging device 10 using the drive control system of the rotating electrical machine 70. In the comparative example, the EMI filter FLT is omitted for simplification. In this comparative example, the configuration (excitation circuit 50) unique to the wound field type rotating electrical machine is also omitted. The charging device 10X of the comparative example also charges the DC power supply 3 of the vehicle driving device 9 with power supplied from the external AC power supply 4, like the in-vehicle charging device 10 of the present embodiment. Like the in-vehicle charging devices 10 of the first example and the second example, the charging device 10X of the comparative example also includes an AC/DC converter (comparative example AC/DC converter 100) and a DC/DC converter (comparative example DC/DC converter 200). In the in-vehicle charging devices 10 of the first example and the second example, the drive system circuit of the rotating electrical machine 70 is shared by the DC/DC converter (second circuit 2), but in the charging device 10X of the comparative example, the drive system circuit of the rotating electrical machine 70 is shared by not the DC/DC converter but the AC/DC converter (comparative example AC/DC converter 100).

In a case where the rotating electrical machine 70 is a wound field type rotating electrical machine, the excitation circuit 50 is preferably shared by the comparative example DC/DC converter 200.

The comparative example AC/DC converter 100 includes the inverter 5, the multi-phase coils 7, a single-phase arm 105 connected in parallel to the inverter 5, and the inductor L1 (first inductor). The multi-phase coils 7 are short-circuited at the neutral point 7N, and the inductor L1 (first inductor) and the external AC power supply 4 are connected in series between the neutral point 7N and the midpoint of the single-phase arm 105. The three-phase arms constituting the inverter 5 are connected in parallel to constitute an apparent single arm, and form a full bridge circuit together with the single-phase arm 105.

The comparative example DC/DC converter 200 includes an arm in which switching elements are connected in series so as to be subjected to complementary switching control, and a second inductor L2 connected to the midpoint of the arm to be configured as a step-down DC/DC converter. The comparative example DC/DC converter 200 may be configured as a step-up converter or a step-up/step-down converter. As described above, in a case where the rotating electrical machine 70 is a wound field type rotating electrical machine, the comparative example DC/DC converter 200 may include the excitation circuit 50.

The charging device 10X of the comparative example also includes the main contactor 11 and the grid contactor 13 similar to those of the in-vehicle charging devices 10 of the first example and the second example. In addition, the charging device 10X of the comparative example also includes the OBC contactor 12 that selectively connects the comparative example AC/DC converter 100 (inverter 5) to the DC power supply 3, or connects the comparative example AC/DC converter 100 (inverter 5) to the comparative example DC/DC converter 200. The OBC contactor 12 includes two contacts, that is, an OBC contactor first contact 12a and an OBC contactor second contact 12b. In a case where the inverter 5 functions as an in-vehicle charging device (charging device 10X of the comparative example), the OBC contactor second contact 12b is closed and the OBC contactor first contact 12a is opened. In a case where the inverter 5 is used for drive control of the rotating electrical machine 70, the OBC contactor first contact 12a is closed, the OBC contactor second contact 12b is opened, and the inverter positive terminal T5P of the inverter 5 is connected to the DC power supply 3 via the OBC contactor 12 and the main contactor 11.

A rotating electrical machine serving as the driving power source of the vehicle is designed to have a high power density, and has a small inductance. As a result, as in the charging device 10X of the comparative example, in a case where the external AC power supply 4 is connected to the neutral point 7N to form the AC/DC converter, a peak value of a harmonic current in the system current of the external AC power supply 4 tends to increase at the time of AC/DC conversion.

As a method of suppressing this, it is conceivable to increase the control frequencies of the inverter 5 included in the comparative example AC/DC converter 100 and the comparative example DC/DC converter 200. In a case where these control frequencies are increased, it is necessary to reduce the control cycle (control frequency) of the control device 8. Switching at a high frequency increases loss in switching elements included in the comparative example AC/DC converter 100 (inverter 5) and the comparative example DC/DC converter 200, leading to a decrease in the efficiency of the charging device 10X of the comparative example. In addition, it is necessary to use a microcomputer or the like that can operate at high speed as the control device 8, which leads to an increase in the cost of the charging device 10X of the comparative example. In view of this point, in the charging device 10X of the comparative example, the coil 7 is used as an inductor, but in order to compensate the inductance insufficient only from the coil 7, the additional inductor L1 is disposed between the external AC power supply 4 and the neutral point 7N of the multi-phase coil 7 to ensure the necessary inductance. In the charging device 10X of the comparative example, an inductor (second inductor L2) is also disposed in the comparative example DC/DC converter 200, and the number of inductors is increased as compared with the in-vehicle charging devices 10 of the first example and the second example, so that the system cost tends to increase.

In view of this point, the in-vehicle charging devices 10 of the first example and the second example are configured to suppress an increase in system cost. Specifically, among the AC/DC converter and the DC/DC converter constituting the charging device, the AC/DC converter (first circuit 1) requiring an appropriate inductance is configured without using the drive system circuit of the rotating electrical machine 70 (the coil 7 of the rotating electrical machine 70 and the inverter 5 that drives the rotating electrical machine 70). That is, the in-vehicle charging devices 10 of the first example and the second example can constitute an AC/DC converter capable of performing AC/DC conversion while ensuring sufficient performance such as a power factor correction function by the AC/DC converter (first circuit 1) in which an appropriate inductance is set using the inductor L1 independent of the drive system circuit (inverter 5, coil 7, field winding 7r) of the rotating electrical machine 70. In addition, the second circuit 2 (for example, DC/DC converter) that does not require high inductance is shared by the drive system circuit (inverter 5 and coil 7) of the rotating electrical machine 70, and the cost of the in-vehicle charging device 10 can be reduced. In the first circuit (AC/DC converter), since an appropriate inductance is set in the AC/DC converter by the inductor L1, it is not necessary to control the AC/DC converter at a short control cycle (high control frequency).

In the in-vehicle charging devices 10 of the first example and the second example, the first circuit 1 that generates first DC power and the second circuit 2 that generates second power are connected via a DC link capacitor 6. In the AC/DC conversion by the first circuit 1, pulsation of a second harmonic component of an AC frequency often remains in the first DC power. In the in-vehicle charging devices 10 of the first example and the second example, the pulsation component of the first DC power is reduced using the smoothing action of the DC link capacitor 6. Therefore, the DC link capacitor 6 is required to have a higher capability than that when acting as a smoothing capacitor in the drive system of the rotating electrical machine 70. As a result, the capacitance of the DC link capacitor 6 is likely to need to be increased as compared with a case where the DC link capacitor 6 is used only for a rotating electrical machine drive system, which may lead to an increase in the size of the capacitor and an increase in cost.

In the in-vehicle charging devices 10 of the third example and the fourth example illustrated in FIGS. 4 and 5, the second circuit 2 is configured as an active decoupling circuit, and the active decoupling circuit reduces the pulsation component of the first DC power. Therefore, the first circuit 1 and the second circuit 2 are connected without other passive components such as the DC link capacitor 6. According to experiments and simulations by the inventors, it has been found that the DC link capacitor 6 of the in-vehicle charging devices 10 of the first example and the second example needs about twice the capacity of the DC link capacitor 6 of the in-vehicle charging device 10 of the third example and the fourth example. As a result, the in-vehicle charging devices 10 of the third example and the fourth example are easy to achieve downsizing and reduction in system cost as compared with the in-vehicle charging devices 10 of the first example and the second example.

Hereinafter, the in-vehicle charging devices 10 of the third example and the fourth example will be described. As illustrated in FIGS. 4 and 5, the in-vehicle charging device 10 includes the main contactor 11 that connects and disconnects the electrical connection between the DC power supply 3 and the DC terminal T5d of the inverter 5 and the electrical connection between the DC power supply 3 and the excitation circuit 50, the OBC contactor 12 that connects and disconnects the electrical connection between the neutral point 7N and the output capacitor Cs, the excitation contactor 14 that disconnects the electrical connection between the excitation circuit 50 and the field winding 7r, and the grid contactor 13 that selectively connects the AC terminal T1a of the first circuit 1 (AC/DC converter) and the external AC power supply 4 (that connects and disconnects the AC terminal T1a to and from the external AC power supply 4). In the first example and the second example, the main contactor 11 includes two contacts. Since a large current flows through both the main contactor first contact 11a and the main contactor second contact 11b, the size of components of the main contactor 11 tends to be relatively large. In the in-vehicle charging devices 10 of the third example and the fourth example, the main contactor 11 includes only one contact. Therefore, an increase in the size of the main contactor 11 is also suppressed, an increase in the device scale of the in-vehicle charging device 10 is also suppressed, and the system cost is easily reduced.

As described above, the first circuit 1 is an AC/DC converter, and in the third example and the fourth example, the second circuit 2 is an active decoupling circuit. As described above, in the third example and the fourth example, the main contactor 11 includes only one contact. In a state where the DC terminal T1d of the first circuit 1, which is an AC/DC converter, and the DC terminal T5d of the inverter 5 are connected without other passive components (for example, the DC link capacitor 6), and as indicated by broken lines in the figures, the main contactor 11 and the excitation contactor 14 are closed and the OBC contactor 12 is opened, power is converted between the DC power supply 3 and the rotating electrical machine 70 via the inverter 5, and the field winding 7r is excited, so that the rotating electrical machine 70 is subjected to drive control. In addition, as indicated by solid lines in the figures, in a state where the main contactor 11 and the OBC contactor 12 are closed and the excitation contactor 14 is opened, power is converted between the external AC power supply 4 and the DC power supply 3 via the first circuit 1, which is an AC/DC converter, and the second circuit 2, which is an active decoupling circuit including the inverter 5. It is needless to mention that the grid contactor 13 is closed at this time.

As illustrated in FIGS. 4 and 5, the in-vehicle charging device 10 includes the OBC contactor 12 that connects and disconnects the electrical connection between the neutral point 7N of the coil 7 and the output capacitor Cs. When the OBC contactor 12 is closed, the OBC contactor 12 is conducted, and the neutral point 7N and the DC negative electrode are connected via the output capacitor Cs. As described above, the drive control system of the rotating electrical machine 70 and the in-vehicle charging device 10 share the main contactor 11. In a case where the grid contactor 13 is closed and the inverter 5 functions as the in-vehicle charging device 10, control is executed in a manner that the main contactor 11 is closed and the OBC contactor 12 is closed. That is, in a state where the main contactor 11 and the OBC contactor 12 are closed and the excitation contactor 14 is opened, power is converted between the external AC power supply 4 and the DC power supply 3 via the AC/DC converter and the active decoupling circuit including the inverter 5.

In a case where the grid contactor 13 is opened and the inverter 5 is used for drive control of the rotating electrical machine 70, control is executed in a manner that the main contactor 11 and the excitation contactor 14 are closed and the OBC contactor 12 is opened. That is, in a state where the main contactor 11 and the excitation contactor 14 are closed and the OBC contactor 12 is opened, power is converted between the DC power supply 3 and the rotating electrical machine 70 via the inverter 5.

As described above, also in the third example and the fourth example, only by changing the connection mode to the coil 7 and the field winding 7r by the OBC contactor 12 and the excitation contactor 14, it is possible to implement a circuit capable of switching between the function of executing drive control on the rotating electrical machine 70 and the function of charging the DC power supply 3 with the external AC power supply 4. That is, the in-vehicle charging device 10 can be configured with a simple configuration.

The circuit block diagram of FIG. 6 illustrates the circuit block diagrams of FIGS. 4 and 5 in a separate manner based on function for easy understanding. The AC/DC converter (first circuit 1) adjusts the power factor of a grid current Igrid supplied from the external AC power supply 4 to a value close to "1" while performing boosting. A pulsation component caused by the AC frequency of the external AC power supply 4 is superimposed on the first DC power output from the AC/DC converter. Specifically, pulsation of the second harmonic component in the AC frequency of the external AC power supply 4 is superimposed. The second circuit 2 functioning as an active decoupling circuit reduces the pulsation of the secondary harmonic component, and supplies the second DC power in which the pulsation is suppressed, preferably the second DC power from which the pulsation is removed, to the DC power supply 3 to charge the DC power supply 3.

Here, assuming that the AC voltage supplied from the external AC power supply 4 is "grid voltage Vgrid" and the AC current is "grid current Igrid", the input power Pin supplied from the external AC power supply 4 is represented by the following formula (1). Assuming that the input power Pin is converted into the first DC power at a power factor of "1", the relationship between the input power Pin and the first DC power can be approximated by the following formula (2). Formula (2) indicates that the first DC power includes a DC component Pdc and an AC component Prpl.

$$Pin = Vgrid \cdot Igrid \ ... \ (1)$$

$$Pin \approx Pdc + Prpl \ ... \ (2)$$

The active decoupling circuit causes a current corresponding to the AC component Prpl included in formula (2), that is, the AC component Prpl included in the first DC power, to flow through the active decoupling circuit, and functions in a manner that the output power Pout to the DC power supply 3 is only the DC component Pdc included in formula (2) (formula (3)). The second circuit 2 as the active decoupling circuit operates in a manner that capacitor power Pcs, which is the power in the output capacitor Cs, matches the AC component Prpl of the first DC power, as shown in the following formula (4).

$$Pout = Pdc \ ... \ (3)$$

$$Prpl = Pcs \ ... \ (4)$$

Since the capacitor power Pcs satisfies the relationship of the following formula (5) between a capacitor voltage Vcs and a capacitor current Ics, the capacitor power Pcs can be controlled by appropriately controlling the capacitor current Ics.

$$Pcs = Vcs \cdot Ics \ ... \ (5)$$

As described above, since the inductance of the coil 7 of the rotating electrical machine 70 is small, the inductor (coil 7) is used in the active decoupling circuit not to store energy but to pass a current. In the in-vehicle charging devices 10 of the third example and the fourth example, the decoupling action by the active decoupling circuit is implemented by using the capacitor current Ics as a discontinuous current due to pulse width modulation instead of a so-called continuous current.

As described above, the inverter 5 includes a plurality of arms in which the upper switching element 5U and the lower switching element 5L are connected in series between the DC positive electrode and the DC negative electrode, the number of arms provided in parallel corresponding to the number of AC phases. In the present embodiment, the inverter 5 includes three arms. In a case where the inverter 5 functions as an active decoupling circuit, the plurality of upper switching elements 5U are simultaneously subjected to switching control, and the plurality of lower switching elements 5L are simultaneously subjected to switching control. That is, the inverter 5 including multi-phase arms corresponding to multi-phase alternating currents can be used as an inverter (switching circuit) including a single-phase arm. Since the current flows through the plurality of arms in a distributed manner, it is easily possible to suppress the consumption of the inverter 5 even if the inverter 5 is used as a part of the in-vehicle charging device 10.

In the switching control, switching control signals (switching pulses) of the upper switching element 5U and the lower switching element 5L are generated on the basis of a sinusoidal capacitor current command I*cs. The phase of the capacitor current command I*cs matches the phase of the grid voltage Vgrid and the phase of the grid current Igrid. The phase of the capacitor voltage Vcs is delayed by $\pi/2$ with respect to the capacitor current Ics.

As described above, in the inverter 5, the plurality of upper switching elements 5U and the plurality of lower switching elements 5L are subjected to switching control in a manner that the phase of the current flowing through the output capacitor Cs matches the phase of the AC current in the AC/DC converter. The active decoupling circuit attenuates an AC harmonic component in the AC/DC converter by flowing the AC harmonic component through the output capacitor Cs. By matching the phase of the current flowing through the output capacitor Cs with the phase of the AC current in the AC/DC converter, the attenuation effect can be enhanced.

As described above, in the present embodiment, it is necessary to cause the current (capacitor current Ics) corresponding to the AC component Prpl that is the pulsation component of the first DC power to flow through the active decoupling circuit. Therefore, the capacitor current command I*cs is set in consideration of the magnitude relationship between the output voltage (= battery voltage Vbat) and the DC power supply 3.

The capacitor voltage Vcs needs to be lower than the battery voltage Vbat. In addition, since pulsation corresponding to the AC component Prpl of the first DC power occurs in the capacitor voltage Vcs, the capacitor voltage Vcs is set to a voltage lower than the battery voltage Vbat in consideration of the amplitude of the pulsation. That is, the amplitude "V*cs_peak" of the capacitor voltage command V*cs, which is a command value of the capacitor voltage Vcs, is preferably set to satisfy the following formula (6) assuming that the amplitude (value from the center of amplitude to the wave height (peak)) of the AC component "Vrpl" of the voltage of the first DC power as "Vrpl_peak".

$$V^*cs\_peak < Vbat - Vrpl\_peak \ ... \ (6)$$

Since the battery voltage Vbat increases as the charging of the DC power supply 3 progresses, when the capacitor voltage command V*cs is constant, the difference between the capacitor voltage Vcs and the battery voltage Vbat increases, the capacitor current Ics increases accordingly, and the loss also increases. Therefore, it is preferable that the capacitor voltage Vcs increase while satisfying formula (6) as the battery voltage Vbat increases. That is, it is preferable that the capacitor voltage command V*cs be set to increase while satisfying formula (6) as the battery voltage Vbat increases.

In the third example and the fourth example, in a case where the inverter 5 functions as an active decoupling circuit, the plurality of upper switching elements 5U are simultaneously subjected to switching control, and the plurality of lower switching elements 5L are simultaneously subjected to switching control. Although the first example and the second example in which the second circuit 2 is a DC/DC converter have a known configuration and thus detailed description of the operation of the DC/DC converter is omitted, similarly to the third example and the fourth example, the plurality of upper switching elements 5U are simultaneously subjected to switching control, and the plurality of lower switching elements 5L are simultaneously subjected to switching control.

When currents of different magnitudes flow through the coil 7, torque is generated in the rotor 72. Since the DC power supply 3 is charged in a state where the vehicle is stopped, it is not preferable that torque is generated in the rotor 72. For example, it is also conceivable that power transmission from the rotor 72 to the wheels is interrupted by a clutch or the like, or the rotation of an output member connected to the wheels or the rotation of the rotor 72 is restricted by a so-called parking brake or the like. However, in these cases, the mechanism of the vehicle driving device 9 becomes complicated, or a mechanical load is generated in a gear or the like of the vehicle driving device 9. In common with the first to fourth examples, the plurality of upper switching elements 5U are simultaneously subjected to switching control, and the plurality of lower switching elements 5L are simultaneously subjected to switching control. Therefore, currents of substantially the same magnitude flow through the multi-phasecoils 7 of the plurality of phases. Therefore, even if the coil 7 is also used for the in-vehicle charging device 10, it is possible to prevent torque from being generated in the rotor 72.

In a case where there is a difference in the magnitude of currents flowing through the multi-phase coils 7 due to individual differences or errors of the coils 7, slight torque may be generated in the rotor 72. For example, in a case where the rotating electrical machine 70 is a permanent magnet synchronous motor (PMSM) in which the rotor 72 includes a permanent magnet, torque may be generated in the rotor 72 since a field magnet is always present in the rotor 72. However, in a case where the rotating electrical machine 70 is an electrically excited synchronous motor (EESM) as in the present embodiment, a field magnet is not generated in the rotor 72 unless the field winding 7r is energized. In a case where the inverter 5 and the coil 7 are used as the in-vehicle charging device 10, the excitation contactor 14 is opened, the field winding 7r is not excited, and the rotor 72 does not generate a field magnet. Therefore, even if there is a difference in the magnitude of currents flowing through the multi-phasecoils 7 of the plurality of phases due to individual differences or errors of the coils 7, torque can be prevented from being generated in the rotor 72 in the first example to the fourth example. That is, in the in-vehicle charging device 10 of the present embodiment in which the rotating electrical machine 70 is an electrically excited synchronous motor, it is easy to prevent torque from being generated in the rotor 72 as compared with the case where the rotating electrical machine 70 is a permanent magnet synchronous motor. Therefore, the risk of causing a mechanical load on the gear or the like of the vehicle driving device 9 is further reduced, and the in-vehicle charging device 10 can be appropriately configured.

According to the first example and the second example described above, among the AC/DC converter and the DC/DC converter constituting the in-vehicle charging device 10, the AC/DC converter requiring an appropriate inductance is configured using the excitation circuit 50 without using the drive system circuit of the rotating electrical machine 70 (the coil 7 of the rotating electrical machine 70 and the inverter 5 that drives the rotating electrical machine 70). In a case where the coil 7 of the rotating electrical machine 70 is used for the in-vehicle charging device 10, it may be difficult to ensure required performance due to the small inductance of the coil 7. However, according to this configuration, it is possible to configure an AC/DC converter capable of performing AC/DC conversion while ensuring sufficient performance such as a power factor correction function by a circuit capable of setting an appropriate inductance using the excitation circuit 50 without using the coil 7 of the rotating electrical machine 70. In addition, the DC/DC converter that does not require a high inductance can be configured using the stator coil (coil 7) and the inverter 5, and the cost of the in-vehicle charging device 10 can be reduced. Since an appropriate inductance can be set in the AC/DC converter, it is not necessary to control the AC/DC converter with a short control cycle (high control frequency), and the loss of the switching element 1S constituting the AC/DC converter is easily reduced. Therefore, the system efficiency of the in-vehicle charging device 10 is easily increased.

According to the third example and the fourth example described above, the AC/DC converter requiring an appropriate inductance is configured without using the drive system circuit of the rotating electrical machine 70 (the coil 7 of the rotating electrical machine 70 and the inverter 5 that drives the rotating electrical machine 70). In a case where the coil 7 of the rotating electrical machine 70 is used for the in-vehicle charging device 10, it may be difficult to ensure required performance due to the small inductance of the coil 7. However, according to this configuration, it is possible to configure an AC/DC converter capable of performing AC/DC conversion while ensuring sufficient performance such as a power factor correction function by a circuit capable of setting an appropriate inductance using the excitation circuit 50 without using the coil 7 of the rotating electrical machine 70. Since an appropriate inductance can be set in the AC/DC converter, it is not necessary to control the AC/DC converter with a short control cycle (high control frequency), and the loss of the switching element 1S constituting the AC/DC converter is easily reduced. Therefore, the system efficiency of the in-vehicle charging device 10 is easily increased. In addition, since a pulsation component is superimposed on a direct current converted from an alternating current by the AC/DC converter, the DC/DC converter is generally disposed at a subsequent stage of the AC/DC converter via a decoupling capacitor for reducing the pulsation component. According to this configuration, since the pulsation component can be reduced by the active decoupling circuit connected to the AC/DC converter without using such a decoupling capacitor, the circuit scale can be easily reduced. In addition, the inverter 5 for driving the rotating electrical machine 70 and the coil 7 of the rotating electrical machine 70 can also be used as the switching element and the inductor constituting the active decoupling circuit, and the circuit scale of the entire in-vehicle system can be easily reduced.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

**Claims**

1. An in-vehicle charging device (10) that charges a DC power supply (3) of a vehicle driving device (9) with power supplied from an external AC power supply (4), the vehicle driving device (9) including a rotating electrical machine (70) of a wound field type serving as a driving power source of a wheel, the rotating electrical machine (70) including a stator (71) including multi-phase stator coils (7) connected to each other at a neutral point (7N) and a rotor (72) including a field winding (7r) that generates a field magnetic flux, the DC power supply (3), an inverter (5) connected between the stator coils (7) and the DC power supply (3) and converting power between a direct current and a multi-phase alternating current, and an excitation circuit (50) connected between the field winding (7r) and the DC power supply (3) and exciting the field winding (7r), the in-vehicle charging device (10) comprising:

    a first circuit (1) configured to include the excitation circuit (50) and convert power between AC power on an external AC power supply side and first DC power; and
    a second circuit (2) configured to include the inverter (5), the multi-phase stator coils (7), and an output capacitor (Cs), and generate second DC power for charging the DC power supply (3) from the first DC power,
    wherein
    the output capacitor (Cs) is connected between the neutral point (7N) of the multi-phase stator coils (7) and a DC negative electrode.

2. The in-vehicle charging device (10) according to Claim 1, further comprising:

    a first contactor (11) that connects and disconnects electrical connection between the DC power supply (3) and a DC terminal of the inverter (5) and electrical connection between the DC power supply (3) and the excitation circuit (50);
    a second contactor (12) that connects and disconnects electrical connection between the neutral point (7N) and the output capacitor (Cs); and
    a third contactor (14) that disconnects electrical connection between the excitation circuit (50) and the field winding (7r),
    wherein
    the first circuit (1) is an AC/DC converter,
    the second circuit (2) is an active decoupling circuit,
    a DC terminal of the AC/DC converter and a DC terminal of the inverter (5) are connected without other passive components,
    in a state where the first contactor (11) and the third contactor (14) are closed and the second contactor (12) is opened, power is converted between the DC power supply (3) and the rotating electrical machine (70) via the inverter (5), and the field winding (7r) is excited, and
    in a state where the first contactor (11) and the second contactor (12) are closed and the third contactor (14) is opened, power is converted between the external AC power supply (4) and the DC power supply (3) via the AC/DC converter and the active decoupling circuit including the inverter (5).

3. The in-vehicle charging device (10) according to Claim 1, further comprising:

    a first contactor (11) that connects and disconnects electrical connection between the output capacitor (Cs) and the DC power supply (3), and connects and disconnects electrical connection between the DC power supply (3) and a DC terminal of the inverter (5) and electrical connection between the DC power supply (3) and the excitation circuit (50) complementarily with the output capacitor (Cs);
    a second contactor (12) that connects and disconnects electrical connection between the neutral point (7N) and the output capacitor (Cs); and
    a third contactor (14) that disconnects electrical connection between the excitation circuit (50) and the field winding (7r),
    wherein
    the first circuit (1) is an AC/DC converter,
    the second circuit (2) is a DC/DC converter,
    in a state where the first contactor (11) is closed, the DC power supply (3) and a DC terminal of the inverter (5) are electrically connected, the third contactor (14) is closed, and the second contactor (12) is opened, power is converted between the DC power supply (3) and the rotating electrical machine (70) via the inverter (5), and the field winding (7r) is excited, and

in a state where the first contactor (11) is closed, the DC power supply (3) and the output capacitor (Cs) are electrically connected, the third contactor (14) is opened, and the second contactor (12) is closed, power is converted between the external AC power supply (4) and the DC power supply (3) via the AC/DC converter and the DC/DC converter including the inverter (5).

FIG.1

FIG. 2

FIG.3

EP 4 491 437 A1

FIG.4

FIG.5

EP 4 491 437 A1

FIG.6

FIG.7

Europäisches
Patentamt

European
Patent Office

Office européen
des brevets

**EUROPEAN SEARCH REPORT**

Application Number

EP 24 18 2175

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/198007 A1 (DELTA ELECTRONICS AMERICAS LTD [US]) 22 September 2022 (2022-09-22) * abstract * * page 3, line 29 - page 7, line 14 * * page 8, line 28 - page 13, line 9 * * page 15, line 24 - page 17, line 7 * * figures 3A-4C,6D,7D,7E * | 1-3 | INV. B60L15/00 B60L50/51 B60L53/14 B60L53/22 B60L53/24 H02J7/02 H02M1/00 |
| X | CN 112 224 034 A (BYD CO LTD) 15 January 2021 (2021-01-15) * abstract * * paragraphs [0044] - [0050], [0091] - [0097], [0104] - [0108]; figures 1-4,6-18 * | 1-3 | |
| X | PL 220 979 B1 (CT NAUK PROD ELEKTRONIK [PL]) 29 February 2016 (2016-02-29) * page 2, line 1 - page 2, line 4 * * page 2, line 26 - page 2, line 48 * * page 3, line 10 - page 4, line 8; figures 2-5 * | 1,2 | TECHNICAL FIELDS SEARCHED (IPC) |
| A | WO 2022/204944 A1 (HUAWEI DIGITAL POWER TECH CO LTD [CN]) 6 October 2022 (2022-10-06) * abstract * * paragraphs [0007] - [0015], [0019] - [0025], [0091] - [0094], [0104] - [0105]; figures 3,4 * | 1-3 | B60L H02J H02M |

The present search report has been drawn up for all claims

| Place of search | Date of completion of the search | Examiner |
|---|---|---|
| The Hague | 3 December 2024 | Molnar, Sabinus |

EPO FORM 1503 03.82 (P04C01)

## ANNEX TO THE EUROPEAN SEARCH REPORT
## ON EUROPEAN PATENT APPLICATION NO.

EP 24 18 2175

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2024

| Patent document cited in search report | | Publication date | Patent family member(s) | | Publication date |
|---|---|---|---|---|---|
| WO 2022198007 | A1 | 22-09-2022 | CN | 116997483 A | 03-11-2023 |
| | | | EP | 4308410 A1 | 24-01-2024 |
| | | | JP | 2024511395 A | 13-03-2024 |
| | | | US | 2024157823 A1 | 16-05-2024 |
| | | | WO | 2022198007 A1 | 22-09-2022 |
| CN 112224034 | A | 15-01-2021 | NONE | | |
| PL 220979 | B1 | 29-02-2016 | NONE | | |
| WO 2022204944 | A1 | 06-10-2022 | CN | 114096435 A | 25-02-2022 |
| | | | CN | 116985640 A | 03-11-2023 |
| | | | EP | 4297269 A1 | 27-12-2023 |
| | | | US | 2024001777 A1 | 04-01-2024 |
| | | | WO | 2022204944 A1 | 06-10-2022 |

EPO FORM P0459

For more details about this annex : see Official Journal of the European Patent Office, No. 12/82

## REFERENCES CITED IN THE DESCRIPTION

**Patent documents cited in the description**

- JP 2022503713 T